# EUROPEAN PATENT APPLICATION

(11) **EP 1 683 415 A1**
(43) Date of publication of application: **26.07.2006**
(21) Application number: 04799440.5
(22) Date of filing: 01.11.2004
(51) Int. Cl.: A01N 25/04, A01N 25/18, A01N 29/02, A01N 33/18, A01N 47/46

(54) **SOIL-FUMIGANT-CONTAINING SOLID MATERIAL**

(30) Priority: 11.11.2003 JP 2003381516
(71) Applicant: Mitsui Chemicals, Inc., Tokyo 105-7117 (JP)
(72) Inventor: OZAWA, Shuji, Mobara-shi, Chiba 297-0017 (JP); WAKAKI, Noriyuki, Mobara-shi, Chiba 297-0017 (JP)
(74) Representative: Nicholls, Kathryn Margaret
(86) International application number: PCT/JP2004/016234
(87) International publication number: WO 2005/044003

(57) **Abstract**

An object of the present invention is to provide formulation in which soil fumigant content is high, and in which release of soil fumigant is extremely suppressed at the use of a soil fumigant, and in which fumigation of soil can be completed within a short period of time after the application to soil; and a process for producing the same.

The present invention relates to a soil-fumigant-containing solid material containing not less than 60 and not more than 85 weight % of a soil fumigant, not less than 0.5 and not more than 15 weight % of gelatin, not less than 0 and not more than 10 weight % of an inorganic mineral, not less than 1 and not more than 15 weight % of polysaccharide that reacts with a divalent or higher valent metal salt to thereby cause gelation and not less than 0.5 and not more than 20 weight % of water.

## Description

### TECHNICAL FIELD

The present invention relates to a soil-fumigant-containing solid material and a process for producing the same. More specifically, the invention relates to a solid material in which release of soil fumigant is extremely suppressed so that a farmer may not feel irritating odor upon using it, and that quickly releases the soil fumigant when it is treated on a soil, and a process for producing the same.

### BACKGROUND ART

A soil fumigant represented by chloropicrin or DD has a high vapor pressure and is easily subjected to gasification under the usual conditions of use. In particular, it is necessary to wear protective glasses, the protective mask and gloves at the use of chloropicrin because chloropicrin has the irritating odor. In order to fumigate soil with chloropicrin, chloropicrin is infused in soil by using a special infuser, and the soil surface is covered with the gas barrier film after infused.

As an odorless chloropicrin formulation, there has been developed formulation which is sealed up chloropicrin adsorbed with dextrin in a bag made of polyvinyl alcohol film or which is sealed up only chloropicrin in a bag made of polyvinyl alcohol (US Patent No. 5846904 and JP1995-324002A).

A soil fumigant such as chloropicrins or the like has been widely used for preventing continuous cropping hazard in a complex area for cultivating crops and a specialized area of production, and is treated during intervals until the next planting after harvesting. In order to increase the planting frequency crops in a year, the period of soil fumigation is preferably as short as possible. In general, the time required for fumigation of soil is from 10 to 15 days when average soil temperature is from 15°C to 25°C .

A specific gelated material in which the acting material contains in the gelated material having a porous structure has been known (JP1980-25456A). A gelated material is obtained by dispersing acting materials such as spices, agricultural chemicals or the like in the sodium alginate aqueous solution or in the low methoxyl pectin aqueous solution, and then reacting sodium alginate or low methoxyl pectin with a divalent or higher valent metal salt. The acting materials are used in an amount of not more than 20 weight % based on the solution. Furthermore, it is also disclosed that the gelated material obtained by drying in which release of the acting material can be suppressed in the above document. It is preferable that a soil fumigant represented by chloropicrin in which release thereof is extremely suppressed so that a farmer may not feel irritating odor upon using it. On the other hand, it is necessary to complete fumigation of soil within a short period of time after the soil fumigant is applied. With respect to this contradicting demanded property in the above document, a method for suppressing release of an acting material is disclosed, but a method for releasing of an acting material within a short period of time is not disclosed. Furthermore, chloropicrin is very heavy, having a specific gravity of 1.67. So, even though chloropicrin was stirred with a sodium alginate aqueous solution or a low methoxyl pectin aqueous solution in the presence of a surfactant, an O/W type emulsion with chloropicrin contained in a high concentration has not been obtained. When the amount of the surfactant used was increased so as to obtain an O/W type emulsion with chloropicrin contained in a high concentration, a homogeneous emulsion has not been obtained. Because a solid material is deposited from the sodium alginate aqueous solution or low methoxyl pectin aqueous solution. For this reason, it was necessary to reduce extremely the amount of chloropicrin used in order to obtain a dispersion of chloropicrin by stirring chloropicrin with a sodium alginate aqueous solution or a low methoxyl pectin aqueous solution in the presence of a surfactant, so that the dispersion with chloropicrin concentration of not more than 5 weight % has only been obtained. A gelated material obtained from dispersion with low chloropicrin concentration was contained low content of chloropicrin. Accordingly, a large amount of water should be removed from the gelated material at a drying step in order to extremely suppress release of soil fumigant. So, there has been a problem that load at the drying was heavy as well. Patent Document 1: US Patent No. 5846904
Patent Document 2: JP1995-324002A
Patent Document 3: JP1980-25456A
Non-patent Document 1: Web Site on the Internet
http://village.infoweb.ne.jp/∼chlopic/siryou/ekiz ai/ekizai.htm

### DISCLOSURE OF THE INVENTION

An object of the present invention is to provide a soil-fumigant-containing solid material with high soil fumigant content and a process for producing the formulation. Another object of the present invention is to provide a soil-fumigant-containing solid material in which release of soil fumigant is extremely suppressed so that a farmer may not feel irritating odor upon using it, and a process for producing the formulation. In addition, a further object of the present invention is to provide a soil-fumigant-containing solid material that quickly releases the soil fumigant when it is treated on the soil and completes fumigation of soil within a short period of time, and a process for producing the formulation.

The present inventors have conducted a keen study on emulsification with a sodium alginate aqueous solution or a low methoxyl pectin aqueous solution by using chloropicrin. The present inventors have found that an O/W type emulsion was quite easily obtained by allowing coexistence of gelatin in chloropicrin, whereas an O/W type emulsion with high chloropicrin content was not obtained according to the conventional method using a surfactant. As the result, a gelated material with high chloropicrin content was obtained by reacting the emulsion with a divalent or higher valent metal salt, and then when the gelated material was dried, a soil-fumigant-containing solid material, in which a farmer did not feel a irritating odor, that is, release of chloropicrin is extremely suppressed, and in which the chloropicrin content was high, was obtained. It was found that, even though the soil-fumigant-containing solid material extremely suppresses release of chloropicrin, it was capable of quickly releasing chloropicrin and completing fumigation of soil within a short period of time when it was applied to the soil. Thus, the present invention has been completed.

That is, the present invention is specified by the following matters:
[1] A soil-fumigant-containing solid material containing not less than 60 and not more than 85 weight % of a soil fumigant, not less than 0.5 and not more than 15 weight % of gelatin, not less than 0 and not more than 10 weight % of an inorganic mineral, not less than 1 and not more than 15 weight % of polysaccharide that reacts with a divalent or higher valent metal salt to thereby cause gelation and not less than 0.5 and not more than 20 weight % of water;
[2] The soil-fumigant-containing solid material as described in [1], wherein the soil fumigant is a soil fumigant having a boiling point of not less than 40°C and a vapor pressure of not less than 70 Pa/20°C;
[3] The soil-fumigant-containing solid material as described in [2], wherein the soil fumigant is one or more kinds of soil fumigants selected from chloropicrin, D-D and allyl isothiocyanate;
[4] The soil-fumigant-containing solid material as described in any one of [1] to [3], wherein the polysaccharide that reacts with a divalent or higher valent metal salt to thereby cause gelation is one or more kinds thereof selected from water-soluble alginate salt, low methoxyl pectin and kappa-carrageenan;
[5] A process for producing the soil-fumigant-containing solid material as described in[1] which comprises the following steps (a) to (c):
   (a) a step of producing an O/W type emulsion containing a soil fumigant of not less than 10 and not more than 85 weight % by stirring an aqueous solution of the polysaccharide that reacts with a divalent or higher valent metal salt to thereby cause gelation, a soil fumigant, a gelatin and an inorganic mineral;
   (b) a step of producing a gelated material by reacting the emulsion obtained in the step (a) with a divalent or higher valent metal salt; and
   (c) a step of producing a soil-fumigant-containing solid material by drying the gelated material obtained in the step (b);
[6] The process for producing the soil-fumigant-containing solid material as described in [5], wherein the soil fumigant is one or more kinds of soil fumigants selected from chloropicrin, D-D and allyl isothiocyanate;
[7] The process for producing the soil-fumigant-containing solid material as described in [5] or [6], wherein the polysaccharide that reacts with a divalent or higher valent metal salt to thereby cause gelation is used in an amount of not less than 1 and not more than 15 weight % based on the soil fumigant;
[8] The process for producing the soil-fumigant-containing solid material as described in any one of [5] to [7], wherein the polysaccharide that reacts with a divalent or higher valent metal salt to thereby cause gelation is one or more kinds thereof selected from water-soluble alginate salt, low methoxyl pectin and kappa-carrageenan;
[9] The process for producing the soil-fumigant-containing solid material as described in any one of [5] to [8], wherein the gelatin is used in an amount of not less than 0.5 and not more than 15 weight % based on the soil fumigant;
[10] The process for producing the soil-fumigant-containing solid material as described in any one of [5] to [9], wherein the inorganic mineral is used in an amount of not less than 0 and not more than 10 weight % based on the soil fumigant;
[11] The process for producing the soil-fumigant-containing solid material as described in any one of [5] to [10], wherein water is contained in an amount of not less than 0.5 and not more than 20 weight % based on the soil-fumigant-containing solid material when the gelated material obtained in the step (b) is dried;
[12] A soil-fumigant-containing solid material produced according to the method in the step (c) as described in any one of [5] to [11];
[13] A gelated material produced according to the method in the step (b) as described in any one of [5] to [10]; and
[14] An O/W type emulsion produced according to the method in the step (a) as described in any one of [5] to [10].

Since the soil-fumigant-containing solid material of the present invention is produced from an O/W type emulsion with a soil fumigant in a high concentration, a soil-fumigant-containing solid material has less load at the time of drying and contains soil fumigant in high content. Since release of soil fumigant is extremely suppressed so that a person does not feel odor, a farmer can handle it with ease. Furthermore, when this solid material is applied to the soil, the soil fumigant is quickly released and fumigation of soil can be completed within a short period of time. Accordingly, such a solid material is useful for the production of crops without reducing the planting frequency in a year.

### BEST MODE FOR CARRYING OUT THE INVENTION

The soil-fumigant-containing solid material of the present invention is produced via the following steps, i.e., (a) a step of producing an O/W type emulsion by stirring an aqueous solution of the polysaccharide that reacts with a divalent or higher valent metal salt to thereby cause gelation, a soil fumigant, a gelatin and an inorganic mineral, (b) a step of producing a gelated material containing a soil fumigant by reacting the emulsion obtained in the step (a) with a divalent or higher valent metal salt, and (c) a step of producing a soil-fumigant-containing solid material by drying the gelated material obtained in the step (b). The gelated material mentioned in the present invention refers to the solid material obtained in the step (b) and the soil-fumigant-containing solid material refers to a solid material obtained in the step (c).

Firstly, the step (a) will be explained. In the step (a), an O/W type emulsion containing a soil fumigant of not less than 10 and not more than 85 weight % is produced by stirring an aqueous solution of the polysaccharide that reacts with a divalent or higher valent metal salt to thereby cause gelation, a soil fumigant composition, a gelatin and an inorganic mineral.

The soil fumigant used in the present invention is a chemicals that is used by fumigating for the purpose of pest control in the soil. It is preferable that the soil fumigant has a boiling point of not less than 40°C and a vapor pressure of not less than 70 Pa/20°C. Suitable examples thereof include chloropicrin, D-D (1,3-dichloropropene) and allyl isothiocyanate. The soil fumigant of the present invention may be used as a single formulation of chloropicrin, D-D or allyl isothiocyanate, or as a mixture of two kinds thereof. Furthermore, chloropicrin, D-D or allyl isothiocyanate can also be mixed with other agricultural chemicals for producing a more functional soil-fumigant-containing solid material. Specifically, a mixed agricultural chemical with other agricultural chemicals such as fosthiazate, pyraclofos, dichlorodiisopropyl ether, methylisothiocyanate and the like can also be used. A mixed agricultural chemical obtained by mixing chloropicrin and/or DD with other agricultural chemicals is also included in the soil-fumigant-containing solid material of the present invention.

The polysaccharide used in the present invention is polysaccharide that reacts with a divalent or higher valent metal salt to thereby cause gelation. (The polysaccharide that reacts with a divalent or higher valent metal salt to thereby cause gelation according to the present invention is simply described as polysaccharide throughout the specification in some cases). As the polysaccharide having such a property, there can be exemplified, for example, alginate salt, low methoxyl pectin or kappa-carrageenan (κ-carrageenan). As alginate salt, for example, sodium alginate, potassium alginate, ammonium alginate and water-soluble salt obtained by using alginic acid as a starting raw material can be used. In general, preferably used is sodium alginate that is cheap and widely used in the food field. Low methoxyl pectin refers to pectin with the esterification degree of not more than 50 %. Kappa-carrageenan is classified into a kappa type carrageenan. It may not be necessarily purified or may be a crude extract. These polysaccharides may be used singly or in combination of two or more kinds.

In the present invention, the amount of the polysaccharide used affects suppression of an odor in the soil fumigant or impact resistance of the soil-fumigant-containing solid material. That is, when the amount of the polysaccharide used is smaller relative to the soil fumigant, suppression of an odor in the soil-fumigant-containing solid material becomes insufficient or impact resistance of the soil-fumigant-containing solid material becomes small. For this reason, the polysaccharide is used in an amount of not less than 1 weight % based on the soil fumigant. The upper limit of the amount of the polysaccharide used is properly determined from the economical viewpoint. However, it may be not more than 15 weight % based on the soil fumigant. These polysaccharides are used as an aqueous solution with a concentration of not less than 0. 5 and not more than 15 weight %.

The soil-fumigant-containing solid material of the present invention needs gelatin in order to produce an O/W type emulsion by stirring a soil fumigant and a polysaccharide aqueous solution. Even though gelatin is dissolved in an aqueous solution containing polysaccharide and then the resulting solution is stirred with a soil fumigant, an O/W type emulsion is not obtained. Only when gelatin is added to a soil fumigant and then the gelatin-added soil fumigant is stirred with an aqueous solution containing polysaccharide, an O/W type emulsion with a soil fumigant contained in a high concentration is obtained.

Gelatin used in the present invention is preferably in the form of powder. When the particle diameter of gelatin powder becomes large, a homogeneous emulsion is not obtained. So, it is preferable to use gelatin in the form of fine powder. Gelatin powder having a particle diameter of not more than 3 mm and preferably not more than 1 mm is desirable. Proper examples thereof include R Fine Powder (a product of Nitta Gelatin Inc.) or the like.

The amount of gelatin used is not less than 0.5 and not more than 15 weight % and preferably not less than 1.0 and not more than 15 weight % based on the soil fumigant.

In this manner, in case the soil fumigant, gelatin and the polysaccharide aqueous solution are stirred, an O/W type emulsion can be produced with ease. The O/W type emulsion mentioned in the present invention refers to those at a state that two phase separation does not occur even after the emulsion is allowed to stand for 10 minutes after stirring is stopped, that is, liquid droplets of the soil fumigant are not observed.

The O/W type emulsion of the present invention can be produced only by stirring the soil fumigant, gelatin and the polysaccharide aqueous solution. However, when an inorganic mineral is further added to the soil fumigant, generation of the O/W type emulsion is much more accelerated.

As the inorganic mineral used in the present invention, there can be exemplified, for example, zeolite, white carbon, talc, clay and the like. The fine particle having a particle diameter of not more than 200 µ isdesirable. Examples of the inorganic mineral in the form of fine particle which is easily available include white carbon and clay powder. The inorganic mineral may be used in an amount of not less than 0 and not more than 10 weight % based on the soil fumigant.

The O/W type emulsion of the present invention comprises of a soil fumigant, a gelatin, a polysaccharide that reacts with a divalent or higher valent metal salt to thereby cause gelation, water and as needed, an inorganic mineral, whereas an ultraviolet absorbent, a preservative, a colorant or the like may further be added to such an extent that generation of the O/W type emulsion is not hindered.

As described above, in the step (a), it is possible to produce an O/W type emulsion containing a soil fumigant in a concentration of not less than 10 and not more than 85 weight %. Among such emulsions, an emulsion containing a soil fumigant in a concentration of not less than 30 and not more than 80 weight % is preferable from the viewpoint of operability of an emulsion or reduction of load at the time of drying in the step (c).

Next, the step (b) will be explained. In the step (b), the O/W type emulsion is reacted with a divalent or higher valent metal salt for producing a gelated material containing a soil fumigant.

The divalent or higher valent metal salt used in the present invention is a cation such as calcium, magnesium, barium, zinc, nickel, copper, lead or the like as its cation. As an aqueous solution containing the aforementioned cation, there can be exemplified, for example, aqueous solutions of calcium salt such as calcium chloride, calcium nitrate, calcium lactate, calcium citrate or the like; magnesium salt such as magnesium chloride or the like; barium salt such as barium chloride or the like; zinc salt such as zinc chloride, zinc nitrate, zinc sulfate or the like; nickel salt such as nickel chloride or the like; copper salt such as copper sulfate or the like; lead salt such as lead acetate or the like; and silver salt such as silver nitrate or the like. Among these, calcium chloride is economically preferable since it is cheap. The metal salt thereof may be used not less than 1 weight time based on the amount of polysaccharide used. Furthermore, the metal salt may be used as an aqueous solution of from 0.1 or more weight % to saturated concentration.

The reaction of the O/W type emulsion with a divalent or higher metal salt can be carried out according to a method of dropping emulsion droplets into an aqueous solution containing a divalent or higher valent metal salt, a method of spraying the aqueous solution containing a divalent or higher valent metal salt on the emulsion droplets or the like.

When the O/W type emulsion of the present invention comes into contact with the aqueous solution containing a divalent or higher valent metal salt, a gelated material is obtained in an instant, and the content of the soil fumigant in the obtained gelated material is almost the same value as the concentration of the soil fumigant in the O/W type emulsion. Since the concentration of the soil fumigant in the emulsion is high in the present invention, the content of the soil fumigant in the gelated material is also increased. In this manner, a gelated material containing a soil fumigant of not less than 10 and not more than 85 weight % and preferably not less than 30 and not more than 80 weight % is produced according to the step (b).

Even though the gelated material obtained in the step (b) suppresses release of the soil fumigant, an odor of the soil fumigant is felt. In order that a irritating odor of the soil fumigant is not felt when a farmer uses such a material, the gelated material is dried in the step (c). Namely, the soil-fumigant-containing solid material of the present invention is produced by drying the gelated material obtained in the step (b).

Lastly, the step (c) will be described. In the step (c), drying can be carried out according to any of general drying methods at a temperature of not more than a boiling point of the soil fumigant, such as hot air drying, vacuum drying and air drying. However, drying under atmospheric pressure is preferable. Drying is carried out until the amount of moisture in the soil-fumigant-containing solid material is not less than 0.5 and not more than 20 weight % and preferably not less than 1.0 and not more than 20 weight %. The thus-obtained soil-fumigant-containing solid material contains not less than 60 and not more than 85 weight % of a soil fumigant, not less than 0.5 and not more than 15 weight % of gelatin, not less than 0 and not more than 10 weight % of an inorganic mineral, not less than 1 and not more than 15 weight % of polysaccharide that reacts with a divalent or higher valent metal salt to thereby cause gelation and not less than 0.5 and not more than 20 weight % of water. The content of the soil fumigant relative to the soil-fumigant-containing solid material mentioned in the present invention refers to a value obtained by analyzing the amount of the soil fumigant by an analyzer such as gas chromatography, high performance liquid chromatography or the like, and the content of gelatin, an inorganic mineral and polysaccharide that reacts with a divalent or higher metal salt to thereby cause gelation relative to the soil-fumigant-containing solid material is a value obtained by dividing the amount of each raw material by the weight of the soil-fumigant-containing solid material. Furthermore, the content of water is a value obtained by subtracting the content of a soil fumigant, gelatin, an inorganic mineral and polysaccharide that reacts with a divalent or higher metal salt to thereby cause gelation from the soil-fumigant-containing solid material.

The soil-fumigant-containing solid material obtained in the step (c) in which release of soil fumigant is extremely suppressed so that a farmer may not feel irritating odor.

In order to promote the release of the soil fumigant from the soil-fumigant-containing solid material, the soil-fumigant-containing solid material may simply be mixed in the soil or buried in the soil. A further feature of the present invention is that the soil fumigant is quickly released into the soil when the soil-fumigant-containing solid material extremely suppresses release of the soil fumigant is treated on the soil. If the soil can be treated with the existing chloropicrin formulation, the soil-fumigant-containing solid material also releases the soil fumigant into the soil, like the chloropicrin formulation, and the period of soil fumigation is also almost the same. In the case of the soil-fumigant-containing solid material of the present invention, the period of soil fumigation is different depending on the particle diameter and soil temperature. However, in general, fumigation of soil is completed for 10 to 15 days when the particle diameter of the soil-fumigant-containing solid material is from 2 to 30 mm and the soil temperature is from 15°C to 25°C. Upon the application of the soil-fumigant-containing solid material, the solid material may be treated by a method such as a method comprising spraying the soil-fumigant-containing solid material manually or using a fertilizer sprayer on the soil surface and then mixing it in the soil, or a method comprising ditching a place for transplanting seedlings and spraying the soil-fumigant-containing solid material on the ditch and then covering the soil, or the like.

In the past, since a soil fumigant had an odor, it was not able to even think of treating a solid fertilizer, a solid formulation such as ainsecticide, a fungicide and/or a herbicide, and a soil fumigant at the same time. The soil-fumigant-containing solid material of the present invention is a solid material in which release of soil fumigant is extremely suppressed. Therefore, the soil-fumigant-containing solid material can be treated along with the aforementioned solid formulations at the same time. The soil-fumigant-containing solid material may be sprayed on the soil surface and then the aforementioned solid formulations may be sprayed, the aforementioned solid formulations may be sprayed and then the soil-fumigant-containing solid material may be sprayed, or the soil-fumigant-containing solid material may be mixed with the aforementioned solid formulations in advance and the resulting mixed granules may be sprayed.

As in the case of the existing chloropicrin formulation, in order to increase the effect of soil fumigation, the soil-fumigant-containing solid material is treated on the soil, and then the soil surface is covered with a gas barrier film.

### EXAMPLES

The present invention is now more specifically illustrated below with reference to Examples.

### Example 1

### Production of O/W type Emulsion (Emulsion No. A) containing Soil Fumigant

To a 4-necked flask of 300-ml were introduced 49 g of chloropicrin (a product with 99.5 % purity) and 0.9 g of gelatin powder (a product of Nitta Gelatin Inc., R Fine Powder). To the 4-necked flask was added 48 g of a 1.5% sodium alginate (a product of Kimica Corporation) aqueous solution and the resulting mixture was stirred under the condition of 66 m/min peripheral speed of a mixing blade. An O/W type emulsion was obtained at 5 minutes after stirring was started.

### Example 2

### Production of O/W type Emulsion (Emulsion No. B) containing Soil Fumigant

To a 4-necked flask of 300-ml were introduced 49 g of chloropicrin (a product with 99.5 % purity), 0.9 g of gelatin powder (a product of Nitta Gelatin Inc., R Fine Powder) and 0.9 g of white carbon. To the 4-necked flask was added 48 g of a 1.5% sodium alginate (a product of Kimica Corporation) aqueous solution and the resulting mixture was stirred under the condition of 66 m/min peripheral speed of a mixing blade. An O/W type emulsion was obtained at 2 minutes after stirring was started.

### Example 3

### Production of O/W type Emulsions (Emulsion Nos. C to K) containing Soil Fumigant

In accordance with the method in Example 1 or 2, the mixture was stirred for the time required for generating an O/W type emulsion containing a soil fumigant under the conditions as described in Table 1, and stirring is stopped after the emulsion was obtained, and then the existence of phase separation was examined by standing for 10 minutes. The results thereof were shown in Table 1. Furthermore, the following are what abbreviations and symbols in the Table stand for.
CP: Chloropicrin (a product of Mitsui Chemicals, Inc.)
SO: Soilean (a product of Mitsui Chemicals, Inc., a mixture of 40 weight % of chloropicrin and 52 weight % of D-D)
D-D: 1,3-dichloropropene (a product of Agro-Kanesho Co., Ltd., 92 weight %)
Inorganic mineral: White carbon was used.
ARG: Sodium alginate (a product of Kimica Corporation)
PEC: Low methoxyl pectin (a product of Nitta Gelatin Inc.)
No: No phase separation occurred even when the emulsion was allowed to stand for 10 minutes after stirring was stopped.
Yes: The phase separation occurred when the emulsion was allowed to stand for 10 minutes after stirring was stopped or an O/W type emulsion was not obtained.

**Table 1 Test Results of O/W Type Emulsions**

| Emulsion No. | Soil Fumigant | | Gelatin | Inorganic Mineral | Aqueous Solution of Polysaccharide | | | Condition for Stirring | Time up to Emulsification (min) | Existence of Phase Separation |
|---|---|---|---|---|---|---|---|---|---|---|
| | Chemical name | Amount used (g) | Amount used (g) | Amount used (g) | Polysaccharide | Concentration (wt%) | Amount of aqueous solution (g) | Peripheral speed (m/min) | | |
| A | CP | 49 | 0.9 | 0 | ARG | 1.5 | 48 | 66 | 5 | No |
| B | CP | 49 | 0.9 | 0.9 | ARG | 1.5 | 48 | 66 | 2 | No |
| C | CP | 8 | 0.8 | 0.4 | ARG | 1.5 | 50 | 66 | 5 | No |
| D | CP | 45 | 0.9 | 0.5 | PEC | 5.0 | 11 | 66 | 2 | No |
| E | CP | 45 | 0.9 | 0 | PEC | 5.0 | 20 | 66 | 5 | No |
| F | CP | 49 | 0.9 | 0 | PEC | 2.0 | 48 | 66 | 5 | No |
| G | CP | 49 | 0.9 | 0.9 | ARG PEC | 1.5 | 48 | 66 | 2 | No |
| H | CP | 49 | 3.6 | 0.9 | ARG | 1.5 | 48 | 66 | 2 | No |
| I | CP | 100 | 7.9 | 2.0 | ARG PEC | 1.5 | 98 | 66 | 2 | No |
| J | SO | 49 | 0.9 | 0 | ARG | 1.5 | 48 | 66 | 5 | No |
| K | D-D | 50 | 3.5 | 1.0 | ARG PEC | 1.5 | 46 | 66 | 2 | No |
| Comparative Example 1 | CP | 49 | - | - | ARG | 1.5 | 48 | 175 | > 15 | Yes |
| Comparative Example 2 | CP | 49 | - | 0.9 | ARG | 1.5 | 48 | 175 | > 15 | Yes |
| Comparative Example 3 | CP | 49 | Surfactant (SORPOL 355H, a product of TOHO Chemical Industry Co., Ltd.) 3.6 g | | ARG | 1.5 | 48 | 175 | Solid material precipitated | Yes |
| Comparative Example 4 | CP | 8 | Surfactant (SORPOL 355H, a product of TOHO Chemical Industry Co., Ltd.) 0.4 g | | ARG | 1.5 | 48 | 175 | Solid material precipitated | Yes |

From the results as described above, it was found that by using gelatin, an O/W type emulsion with a soil fumigant contained in a high concentration could be produced. Furthermore, it was found that when an inorganic mineral was further added, generation an O/W type emulsion was accelerated.

### Example 4

Production of Gelated Material (Gelation Material No. (a)) containing Soil Fumigant

To 200 g of a 1.5 % calcium chloride aqueous solution was dropped 97 g of the O/W type emulsion A produced in Example 1 to obtain 98 g of a gelated material (a) containing chloropicrin (chloropicrin content: 49 weight %).

In the same manner, gelated materials (b) to (k) were respectively obtained from the emulsion (B) to (K) as described in Examples 2 and 3. The results were shown in Table 2.

**Table 2 Production Results of Gelated Materials**

| Gelated Material No. | O/W type Emulsion | | Amount of 1% Calcium Chloride Aqueous Solution used (g) | Gelated Material | | |
|---|---|---|---|---|---|---|
| | No. | Amount used (g) | | Yield | CP Content (wt%) | D-D Content (wt%) |
| a | A | 97 | 200 | 98 | 49 | - |
| b | B | 98 | 200 | 99 | 49 | - |
| c | C | 58 | 200 | 60 | 13 | - |
| d | D | 57 | 200 | 58 | 78 | - |
| e | E | 65 | 200 | 66 | 68 | - |
| f | F | 97 | 200 | 98 | 48 | - |
| g | G | 98 | 200 | 99 | 49 | - |
| h | H | 100 | 200 | 102 | 48 | - |
| I | I | 207 | 500 | 208 | 48 | - |
| J | J | 97 | 200 | 98 | 20 | 26 |
| K | K | 102 | 200 | 103 | - | 45 |

From the results as described above, it was found that a gelated material with high soil fumigant content could be produced.

### Example 5

### Production of Soil-fumigant-containing Solid Material (Soil-fumigant-containing Solid Material No. (A-a))

Ninety g of the gelated material (a) produced in Example 4 was air-dried at room temperature for 48 hours to obtain 39 g of a soil-fumigant-containing solid material (A-a) (chloropicrin content: 80 %).

The gelated materials (b) to (k) obtained in the above Example 4 were dried under the conditions as described in Table 3 to obtain soil-fumigant-containing solid materials (B-b) to (K-k) respectively.

**Table 3 Production Results of Soil-fumigant-containing Solid Materials**

| Soil-fumigant -containing Solid Material No. | Gelated Material | | Dry Condition | Soil-fumigant-containing Solid Material | | | | |
|---|---|---|---|---|---|---|---|---|
| | Gelated Material No. | Amount used (g) | | Yield (g) | CP Content (wt%) | D-D Content (wt%) | Moisture Amount (wt%) | Particle Diameter (mm) |
| A-a | a | 90 | Air drying, 48 hr | 39 | 80 | - | 16 | 5 ∼ 8 |
| B-b | b | 90 | Air drying, 48 hr | 39 | 80 | - | 14 | 5 ~ 8 |
| C-c | c | 50 | Air drying, 48 hr | 7 | 69 | - | 8 | 5 ~ 8 |
| D-d | d | 50 | Air drying, 48 hr | 33 | 80 | - | 15 | 5 ~ 8 |
| E-e | e | 55 | Air drying, 48 hr | 33 | 81 | - | 14 | 5 ~ 8 |
| F-f | f | 90 | Air drying, 48 hr | 39 | 81 | - | 15 | 5 ~ 8 |
| G-g | g | 90 | Air drying, 72 hr | 37 | 83 | - | 9 | 5 ∼ 8 |
| H-h | h | 90 | Air drying, 72 hr | 38 | 82 | - | 6 | 5 ∼ 8 |
| I-i | i | 200 | Air drying, 72 hr | 87 | 78 | - | 4 | 5 ∼ 8 |
| J-j | j | 90 | Air drying, 48 hr | 36 | 34 | 47 | 15 | 5 ~ 8 |
| K-k | k | 100 | Air drying, 72 hr | 38 | - | 76 | 4 | 5 ∼ 8 |

From the results as described above, it was found that a soil-fumigant-containing solid material with high soil fumigant content could be produced. Furthermore, an odor of the soil fumigant was not observed in the obtained soil-fumigant-containing solid materials.

### Reference Example 1

### Analysis of Amount of Soil Fumigant in Soil-fumigant-containing Solid Material

Twenty ml of a solution of methanol and water (9:1, volume:volume) was fed into a silicone stopper-fed 50-ml test tube which was accurately weighed in advance, and accurately weighed. A tablet of the soil-fumigant-containing solid material (A-a) was put into this solution for accurately weighing. The resulting solution was kept at room temperature for 6 days, and then the amount of the soil fumigant in the solution was measured by high performance liquid chromatography. The amount of the soil fumigant contained in the soil-fumigant-containing solid material was calculated from the amount of the soil fumigant in the solution.

### Example 6

### Measurement of Odor in Soil-fumigant-containing Solid Material

Five g of the gelated material or soil-fumigant-containing solid material obtained in Examples 4 and 5 in terms of the chloropicrin amount was fed into a 500-ml poly-container, and was hermetically sealed and kept at room temperature for 24 hours. Two hundred ml of air in the gas phase was collected and the collected air was absorbed into 10 ml of methanol. The amount of chloropicrin in the methanol solution was measured by high performance liquid chromatography.

**Table 4 Amount of Chloropicrin in Gas Phase**

| Soil-fumigant-containing Solid Material No. or Gelated Material No. | Amount of Chloropicrin (mg/methanol, 10 ml) |
|---|---|
| A-a | 0.01 |
| B-b | 0.01 |
| E-e | 0.01 |
| G-g | 0.01 |
| I-i | 0.01 |
| a | 15.3 |
| b | 15.7 |
| e | 15. 5 |
| g | 15.9 |
| i | 15.7 |
| Chloropicrin | 24.7 |

From the results as described above, the soil-fumigant-containing solid material in which release of soil fumigant is extremely suppressed relative to the soil fumigant and the gelated material.

### Example 7

Into a 4-necked flask of 300-ml were fed 37 g of chloropicrin (a product with 99.5 % purity) and 12 g of fosthiazate (product name: Nemathrin) and mixed. Into the resulting mixture were fed 0.9 g of gelatin powder (a product of Nitta Gelatin Inc., R Fine Powder) and 0.9 g of white carbon. Into the resulting mixture was added 48 g of a 1.5 % sodium alginate (a product of Kimica Corporation) aqueous solution and the resulting mixture was stirred under the condition of 66 m/min peripheral speed of a mixing blade to produce an O/W type emulsion. To 200 g of a 1.5 % calcium chloride aqueous solution was dropped 97 g of the emulsion to obtain 98 g of a gelated material containing chloropicrin and fosthiazate (chloropicrin content: 37 weight % and fosthiazate content: 12 %). Ninety g of the above gelated material was air-dried for 48 hours to obtain 45 g of a solid material containing chloropicrin and fosthiazate (chloropicrin content: 55 weight % and fosthiazate content: 26 weight %). An odor of chloropicrin was not felt. From the results, it was found that a soil-fumigant-containing solid material was obtained even from a mixed agricultural chemical of chloropicrin and other agricultural chemicals.

### Example 8

### Test on Soil Treatment of Soil-fumigant-containing Solid Material

A 62.2-L volume container was filled with 41 L of soil (soil moisture: 15 weight %) in the suburbs of Mobara-shi. Three g of the soil-fumigant-containing solid materials A-a B-b, F-f G-g and J-j obtained in Example 5 in terms of the chloropicrin amount was buried at the depth of 10 cm in the center of the container. Similarly, the following comparative formulations X and Y were buried. After burying, the surface was covered with a 0.05-mm vinyl sheet for agricultural use. After 30 minutes, 1 hour, 3 hours, 7 hours, 24 hours, 48 hours, 72 hours, 96 hours, 168 hours and 240 hours, 200 ml of air in the gas phase was collected and the collected air was absorbed into 10 ml of methanol. The methanol solution was analyzed by HPLC for examining the amount of chloropicrin.

Comparative Formulation X: Formulation that is 3 g of chloropicrin put into a 4 cm x 9 cm bag made of a polyvinyl alcohol film (a product of Nippon Synthetic Chemical Industry Co., Ltd., Hi-Selon S400C) and hermetically sealed.

Comparative Formulation Y: Formulation that is 3 g of Soilean (a product of Mitsui Chemicals, Inc.) put into a 4 cm x 9 cm bag made of a polyvinyl alcohol film (a product of Nippon Synthetic Chemical Industry Co., Ltd., Hi-Selon S400C) and hermetically sealed.

**Table 5 Test results on soil treatment of soil-fumigant-containing solid material**

| Soil - fumigant - containing solid material No. | Amount of Chloropicrin in Gas Phase (Unit: µg/methanol, 10 ml) | | | | | | | | | |
|---|---|---|---|---|---|---|---|---|---|---|
| | 0.5 hr | 1hr | 3 hr | 7 hr | 24 hr | 48 hr | 72 hr | 96 hr | 168 hr | 240 hr |
| A-a | 0 | 28 | 37 | 86 | 680 | 998 | 1245 | 1040 | 283 | 31 |
| B-b | 0 | 0 | 39 | 94 | 600 | 980 | 1340 | 1100 | 350 | 35 |
| F-f | 0 | 20 | 42 | 90 | 690 | 960 | 1230 | 1060 | 280 | 21 |
| G-g | 0 | 15 | 38 | 86 | 650 | 940 | 1227 | 1061 | 271 | 20 |
| J-j | 0 | 4 | 10 | 28 | 260 | 372 | 478 | 400 | 98 | 5 |
| Comparative Formulation X | 7 | 15 | 97 | 222 | 799 | 1184 | 1153 | 954 | 302 | 28 |
| Comparative Formulation Y | 0 | 5 | 40 | 89 | 330 | 464 | 450 | 371 | 102 | 8 |

From the results as described above, it was found that when the soil-fumigant-containing solid material was treated on the soil, fumigation of soil could also be effected like the soil fumigant that is the comparative formulation.

### Example 9

### Effect on Fusarium Wilt of Cucumber

A field contaminated with Fusarium oxysporum f.sp. cucumerinum was plowed and harrowed by a tractor. An area of 120 cm in width and 600 cm in length was used as an experimental plot. On the whole surface was sprayed 55 g of the soil-fumigant-containing solid material I-i obtained in Example 5, and then mixed in the soil. After mixed in the soil, the soil surface was covered with a polyethylene film having a thickness of 0.05 mm. As a comparative formulation, chloropicrin (a product of Mitsui Chemicals, Inc.) was drenched at the depth of 15 cm at intervals of 30 cm by 3 ml per hole and the holes were covered with the soil, and the soil surface was covered with a polyethylene film. After 20 days from the treatment, the covering polyethylene film was removed and 40 seedlings of cucumbers were planted per each plot. After 40 days from the transplantation, the disease incidence of Fusarium wilt of cucumber was examined from the degrees of browning in the vessel of the basal part.

**Table 6 Effect on Fusarium oxysporum f.sp. cucumerinum**

| Test Formulation | Control Effect |
|---|---|
| Soil-fumigant-containing solid material I-i | 100 |
| Chloropicrin | 100 |
| Untreated Plot | 0 |

From Table 6, the soil-fumigant-containing solid material I-i exhibited the same effect as the chloropicrin formulation that was the comparative formulation. Namely, it was found that the soil-fumigant-containing solid material had the same effect as the soil fumigant that was the comparative formulation.

The soil-fumigant-containing solid material according to the present invention is produced from the emulsion with a soil fumigant contained in a high concentration. So, it is a soil-fumigant-containing solid material with less load at the time of drying and with high soil fumigant content. Since the solid material in which release of soil fumigant is extremely suppressed so that a person may not feel irritating odor, a farmer can handle it with ease. Furthermore, when the above solid material is applied to the soil, the soil can be fumigated quickly and within a short period of time. Such a solid material is useful for the production of crops without reducing the planting frequency in a year.

## Claims

1. A soil-fumigant-containing solid material containing not less than 60 and not more than 85 weight % of a soil fumigant, not less than 0.5 and not more than 15 weight % of gelatin, not less than 0 and not more than 10 weight % of an inorganic mineral, not less than 1 and not more than 15 weight % of polysaccharide that reacts with a divalent or higher valent metal salt to thereby cause gelation and not less than 0.5 and not more than 20 weight % of water.

2. The soil-fumigant-containing solid material according to claim 1, wherein the soil fumigant is a soil fumigant having a boiling point of not less than 40°C and a vapor pressure of not less than 70 Pa/20°C.

3. The soil-fumigant-containing solid material according to claim 2, wherein the soil fumigant is one or more kinds of soil fumigants selected from chloropicrin, D-D and allyl isothiocyanate.

4. The soil-fumigant-containing solid material according to any one of claims 1 to 3, wherein the polysaccharide that reacts with a divalent or higher valent metal salt to thereby cause gelation, is one or more kinds thereof selected from water-soluble alginate salt, low methoxyl pectin and kappa-carrageenan.

5. A process for producing the soil-fumigant-containing solid material as described in claim 1 which comprises the following steps (a) to (c):
(a) a step of producing an O/W type emulsion containing a soil fumigant of not less than 10 and not more than 85 weight % by stirring an aqueous solution of the polysaccharide that reacts with a divalent or higher valent metal salt to thereby cause gelation, a soil fumigant, a gelatin and an inorganic mineral;
(b) a step of producing a gelated material by reacting the emulsion obtained in the step (a) with a divalent or higher valent metal salt; and
(c) a step of producing a soil-fumigant-containing solid material by drying the gelated material obtained in the step (b).

6. The process for producing the soil-fumigant-containing solid material according to claim 5, wherein the soil fumigant is one or more kinds of soil fumigants selected from chloropicrin, D-D and allyl isothiocyanate.

7. The process for producing the soil-fumigant-containing solid material according to claim 5 or 6, wherein the polysaccharide that reacts with a divalent or higher valent metal salt to thereby cause gelation is used in an amount of not less than 1 and not more than 15 weight % based on the soil fumigant.

8. The process for producing the soil-fumigant-containing solid material according to any one of claims 5 to 7, wherein the polysaccharide that reacts with a divalent or higher valent metal salt to thereby cause gelation is one or more kinds thereof selected from water-soluble alginate salt, low methoxyl pectin and kappa-carrageenan.

9. The process for producing the soil-fumigant-containing solid material according to any one of claims 5 to 8, wherein the gelatin is used in an amount of not less than 0.5 and not more than 15 weight % based on the soil fumigant.

10. The process for producing the soil-fumigant-containing solid material according to any one of claims 5 to 9, wherein the inorganic mineral is used in an amount of not less than 0 and not more than 10 weight % based on the soil fumigant.

11. The process for producing the soil-fumigant-containing solid material according to any one of claims 5 to 10, wherein water is contained in an amount of not less than 0.5 and not more than 20 weight % based on the soil-fumigant-containing solid material when the gelated material obtained in the step (b) is dried.

12. A soil-fumigant-containing solid material produced according to the method in the step (c) as described in any one of claims 5 to 11.

13. A gelated material produced according to the method in the step (b) as described in any one of claims 5 to 10.

14. An O/W type emulsion produced according to the method in the step (a) as described in any one of claims 5 to 10.
